# EUROPEAN PATENT SPECIFICATION

(11) **EP 3 752 354 B1**
(45) Date of publication and mention of the grant of the patent: **13.07.2022**
(21) Application number: 19705150.1
(22) Date of filing: 11.02.2019
(51) Int. Cl.: B32B 5/02, B32B 5/26, B32B 7/12, B32B 9/02, B32B 9/04, B32B 27/12, B32B 27/30, B32B 27/40, B32B 37/12, B60N 2/68, B60N 3/00, B32B 1/00, B32B 3/04, B32B 3/08, B32B 3/14, B60N 2/00

(54) **BACK PANEL FOR A VEHICLE SEAT**
RÜCKENPLATTE FÜR EINEN FAHRZEUGSITZ
PANNEAU ARRIÈRE POUR SIÈGE DE VÉHICULE

(30) Priority: 12.02.2018 US 201862629155 P
(43) Date of publication of application: 23.12.2020
(73) Proprietor: Adient US LLC, Plymouth, MI 48170 (US)
(72) Inventor: BEDRO, Ronald G., Plymouth, Michigan 48170 (US)
(74) Representative: Liedhegener, Ralf
(86) International application number: PCT/EP2019/053248
(87) International publication number: WO 2019/155045

(56) References cited:
- EP-A1- 1 170 170
- US-A1- 2011 053 448

## Description

### BACKGROUND OF THE DISCLOSURE

The present disclosure generally relates to vehicle seats, and more particularly to back panels of vehicle seats and manufacturing of back panels of vehicle seats.

Vehicle seats, back panels of vehicle seats, and methods of manufacturing back panels of vehicle seats are generally known in the state of the art.

US 2011/053 448 A1 discloses a trim cover assembly and a method of manufacturing such a trim cover assembly. The trim cover assembly has a first layer and a second layer. The first layer has a first surface and a second surface disposed opposite the first surface. The second layer is disposed against the second surface. The second layer inhibits plastic deformation of the first layer.

EP 1 170 170 A1 discloses an upholstery item for a motor vehicle, in particular for a motor vehicle seat, comprising at least one composite element including at least one layer of thermoplastic material with a covering layer of textile material or of synthetic leather, for example, bonded thereto.

### SUMMARY OF THE DISCLOSURE

It is an object of the present disclosure to provide an improved back panel for a vehicle seat, and a method of manufacturing such a back panel.

According to the disclosure, the object is solved concerning the back panel by the features of claim 1 and concerning the method of manufacturing by the features of claim 8.

A back panel for a vehicle seat according to the invention comprises an upper layer, a lower layer supporting the upper layer, an adhesive layer arranged between the upper layer and the lower layer and fixing the upper layer to the lower layer, and a toe kick having a first end portion abutting a bottom of the upper layer. The lower layer and the adhesive layer extend beyond the bottom of the upper layer to the first end portion of the toe kick, and the first end portion of the toe kick is fixed to the lower layer by the adhesive layer.

A method of manufacturing a back panel for a vehicle seat according to the invention comprises the steps of:
placing in a tool a stack formed of a lower layer material, an adhesive, an upper layer material and a toe kick material, wherein a first end portion of the toe kick material abuts a bottom of the upper layer material, the adhesive is placed between the upper layer material and the lower layer material, and the lower layer material and the adhesive extend beyond the bottom of the upper layer material to the first end portion of the toe kick material; and
welding the stack to form a one piece back panel comprising a lower layer, an adhesive layer, an upper layer and a toe kick.

A second end portion of the toe kick material may be protected from the welding process when manufacturing the back panel. For instance, a second end portion of the toe kick material may extend from the tool when manufacturing the back panel. In this way, the second end portion of the toe kick is not affected by the welding process. In particular, the second end portion of the toe kick is prevented from being damaged by the welding process.

A back panel for a vehicle seat according to the invention thus has a toe kick to prevent the feet of a user seated behind the vehicle seat with the toe kick from contacting equipment such as brackets or wires. When the toe kick is integrated into the back panel when manufacturing the backpanel by welding, no manual, labor intensive process is required to attach a toe kick to the back panel by sewing, velcro or other attachment methods.

In an embodiment of the invention the lower layer and the adhesive layer extend 5 mm to 150 mm beyond the bottom of the upper layer. This provides a sufficient area of the adhesive layer and the lower layer to firmly fix the toe kick.

In another embodiment of the invention the upper layer material is polyvinyl chloride or thermoplastic polyurethane or leather or textile. All these materials can provide an upper layer with appropriate elasticity and comfortable haptic features.

In another embodiment of the invention the lower layer material is a non-woven material. Woven materials have anisotropic distension features which make them inappropriate lower layer materials.

In another embodiment of the invention the toe kick material is a carpet material or polyvinyl chloride or thermoplastic polyurethane or leather or textile. All these materials can provide a toe kick with appropriate pliability when moving or tilting the vehicle seat.

In another embodiment of the invention the toe kick is bent approximately 90 degrees. This allows a portion of the toe kick to extend approximately in parallel with either the vehicle seat or the floor beneath the vehicle seat.

A vehicle seat according to the invention comprises a back panel according to the invention.

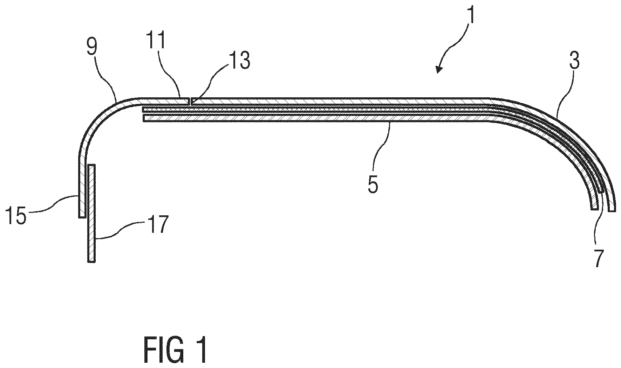

### BRIEF DESCRIPTION OF THE DRAWING

The present disclosure will become more fully understood from the detailed description given herein below and the accompanying drawing which is given by way of illustration only, and thus, is not limitative of the present disclosure, wherein the figure shows a sectional view of an exemplary embodiment of a back panel for a vehicle seat.

### DETAILED DESCRIPTION OF PREFERRED EMBODIMENTS

The figure shows a sectional view of a back panel 1 of a vehicle seat. The back panel 1 comprises an upper layer 3, a lower layer 5, an adhesive layer 7 and a toe kick 9.

The adhesive layer 7 is arranged between a rear surface of the upper layer 3 and a front surface of the lower layer 5 and fixes the upper layer 3 to the lower layer 5.

The toe kick 9 has a first end portion 11 abutting a bottom 13 of the upper layer 3. A second end portion 15 of the toe kick 9 is bent approximately90 degrees relatively to the first end portion 11 towards the rear side of the back panel 1.

The lower layer 5 and the adhesive layer 7 extend 5 mm to 150 mm beyond the bottom 13 of the upper layer 3 to the first end portion 11 of the toe kick 9. The first end portion 11 of the toe kick 9 is fixed to the lower layer 5 by the adhesive layer 7.

The upper layer 3 is made of polyvinyl chloride or thermoplastic polyurethane or leather or textile.

The lower layer 5 is made of a non-woven material.

The toe kick 9 is made of a carpet material or polyvinyl chloride or thermoplastic polyurethane or leather or textile.

The second end portion 15 of the toe kick 9 is attached to an elastic 17 or stretchy or flexible material which is connected to a bottom part of the vehicle seat and allows the toe kick 9 to move when the seat back is tilted.

The back panel 1 is manufactured by welding. To this end a stack formed of a lower layer material, an adhesive, an upper layer material and a toe kick material is placed in a tool, with a first end portion of the toe kick material abutting a bottom of the upper layer material, the adhesive placed between the upper layer material and the lower layer material, and the lower layer material and the adhesive extending beyond the bottom of the upper layer material to the first end portion of the toe kick material. Subsequently the stack is welded to form a one piece back panel 1 comprising the lower layer 5, the adhesive layer 7, the upper layer 3 and the toe kick 9. Asecond end portion of the toe kick material may be protected from the welding process, and/or may extend from the tool.

### List of References

- 1: back panel
- 3: upper layer
- 5: lower layer
- 7: adhesive layer
- 9: toe kick
- 11: first end portion
- 13: bottom of upper layer
- 15: second end portion
- 17: elastic

## Claims

1. A back panel (1) for a vehicle seat, the back panel (1) comprising:
an upper layer (3);
a lower layer (5) supporting the upper layer (3);
an adhesive layer (7) arranged between the upper layer (3) and the lower layer (5) and fixing the upper layer (3) to the lower layer (5);
a toe kick (9) having a first end portion (11) abutting a bottom (13) of the upper layer (3);
wherein the lower layer (5) and the adhesive layer (7) extend beyond the bottom (13) of the upper layer (3) to the first end portion (11) of the toe kick (9),
and the first end portion (11) of the toe kick (9) is fixed to the lower layer (5) by the adhesive layer (7).

2. The back panel (1) of claim 1, wherein the lower layer (5) and the adhesive layer (7) extend 5 mm to 150 mm beyond the bottom (13) of the upper layer (3).

3. The back panel (1) of claim 1 or 2, wherein the upper layer (3) is made of polyvinyl chloride or thermoplastic polyurethane or leather or textile.

4. The back panel (1) of any one of the preceding claims, wherein the lower layer (5) is made of a non-woven material.

5. The back panel (1) of any one of the preceding claims, wherein the toe kick (9) is made of a carpet material or polyvinyl chloride or thermoplastic polyurethane or leather or textile.

6. The back panel (1) of any one of the preceding claims, wherein the toe kick (9) is bent approximately 90 degrees.

7. A vehicle seat comprising a back panel (1) of any one of the preceding claims.

8. A method of manufacturing a back panel (1) for a vehicle seat, comprising the steps of:
placing in a tool a stack formed of a lower layer material, an adhesive, an upper layer material and a toe kick material, with a first end portion (11) of the toe kick material abutting a bottom of the upper layer material, the adhesive placed between the upper layer material and the lower layer material, and the lower layer material and the adhesive extending beyond the bottom of the upper layer material to the first end portion (11) of the toe kick material; and
welding the stack to form a one piece back panel (1) comprising a lower layer (5), an adhesive layer (7), an upper layer (3) and a toe kick (9).

9. The method of claim 8, wherein a second end portion of the toe kick material is protected from the welding process.

10. The method of claim 8 or 9, wherein a second end portion of the toe kick material extends from the tool.

11. The method of any one of claims 8 to 10, wherein the lower layer material and the adhesive extend 5 mm to 150 mm beyond the bottom (13) of the upper layer (3).

12. The method of any one of claims 8 to 11, wherein the upper layer material is polyvinyl chloride or thermoplastic polyurethane or leather or textile.

13. The method of any one of claims 8 to 12, wherein the lower layer material is a non-woven material.

14. The method of any one of claims 8 to 13, wherein the toe kick material is a carpet material or polyvinyl chloride or thermoplastic polyurethane or leather or textile.

15. The method of any one of claims 8 to 14, wherein the toe kick (9) is bent approximately 90 degrees.

## Patentansprüche

1. Rückwand (1) für einen Fahrzeugsitz, wobei die Rückwand (1) umfasst:
eine obere Schicht (3);
eine untere Schicht (5), die die obere Schicht (3) trägt;
eine Klebstoffschicht (7), die zwischen der oberen Schicht (3) und der unteren Schicht (5) angeordnet ist und die obere Schicht (3) an der unteren Schicht (5) befestigt;
eine Fußleiste (9) mit einem ersten Endabschnitt (11), der an ein unteres Ende (13) der oberen Schicht (3) anstößt;
wobei die untere Schicht (5) und die Klebstoffschicht (7) über das untere Ende (13) der oberen Schicht (3) hinaus zu dem ersten Endabschnitt (11) der Fußleiste (9) verlaufen und der erste Endabschnitt (11) der Fußleiste (9) durch die Klebstoffschicht (7) an der unteren Schicht (5) befestigt ist.

2. Rückwand (1) gemäß Anspruch 1, wobei die untere Schicht (5) und die Klebstoffschicht (7) 5 mm bis 150 mm über das untere Ende (13) der oberen Schicht (3) hinaus verlaufen.

3. Rückwand (1) gemäß Anspruch 1 oder 2, wobei die obere Schicht (3) aus Polyvinylchlorid oder thermoplastischem Polyurethan oder Leder oder Textilmaterial besteht.

4. Rückwand (1) gemäß einem der vorstehenden Ansprüche, wobei die untere Schicht (5) aus einem Vliesmaterial besteht.

5. Rückwand (1) gemäß einem der vorstehenden Ansprüche, wobei die Fußleiste (9) aus einem Teppichmaterial oder Polyvinylchlorid oder thermoplastischem Polyurethan oder Leder oder Textilmaterial besteht.

6. Rückwand (1) gemäß einem der vorstehenden Ansprüche, wobei die Fußleiste (9) um etwa 90 Grad gebogen ist.

7. Fahrzeugsitz, umfassend eine Rückwand (1) gemäß einem der vorstehenden Ansprüche.

8. Verfahren zur Herstellung einer Rückwand (1) für einen Fahrzeugsitz, umfassend die Schritte:
Anordnen eines Stapels, der aus einem Untere-Schicht-Material, einem Klebstoff, einem Obere-Schicht-Material und einem Fußleistenmaterial besteht, in einem Werkzeug, wobei ein erster Endabschnitt (11) des Fußleistenmaterials an ein unteres Ende des Obere-Schicht-Materials anstößt, der Klebstoff zwischen dem Obere-Schicht-Material und dem Untere-Schicht-Material angeordnet ist und das Untere-Schicht-Material und der Klebstoff über das untere Ende des Obere-Schicht-Materials hinaus zu dem ersten Endabschnitt (11) des Fußleistenmaterials verlaufen; und
Verschweißen des Stapels, um eine einstückige Rückwand (1) zu bilden, die eine untere Schicht (5), eine Klebstoffschicht (7), eine obere Schicht (3) und eine Fußleiste (9) umfasst.

9. Verfahren gemäß Anspruch 8, wobei ein zweiter Endabschnitt des Fußleistenmaterials vor dem Schweißvorgang geschützt ist.

10. Verfahren gemäß Anspruch 8 oder 9, wobei ein zweiter Endabschnitt des Fußleistenmaterials aus dem Werkzeug hinaus verläuft.

11. Verfahren gemäß einem der Ansprüche 8 bis 10, wobei das Untere-Schicht-Material und der Klebstoff 5 mm bis 150 mm über das untere Ende (13) der oberen Schicht (3) hinaus verläuft.

12. Verfahren gemäß einem der Ansprüche 8 bis 11, wobei das Obere-Schicht-Material Polyvinylchlorid oder thermoplastisches Polyurethan oder Leder oder Textilmaterial ist.

13. Verfahren gemäß einem der Ansprüche 8 bis 12, wobei das Untere-Schicht-Material ein Vliesmaterial ist.

14. Verfahren gemäß einem der Ansprüche 8 bis 13, wobei das Fußleistenmaterial ein Teppichmaterial oder Polyvinylchlorid oder thermoplastisches Polyurethan oder Leder oder Textilmaterial ist.

15. Verfahren gemäß einem der Ansprüche 8 bis 14, wobei die Fußleiste (9) um etwa 90 Grad gebogen ist.

## Revendications

1. Panneau arrière (1) pour un siège de véhicule, le panneau arrière (1) comprenant :
une couche supérieure (3) ;
une couche inférieure (5) supportant la couche supérieure (3) ;
une couche adhésive (7) agencée entre la couche supérieure (3) et la couche inférieure (5) et fixant la couche supérieure (3) à la couche inférieure (5) ;
une plinthe (9) ayant une première partie d'extrémité (11) en butée contre un fond (13) de la couche supérieure (3) ;
la couche inférieure (5) et la couche adhésive (7) s'étendant au-delà du fond (13) de la couche supérieure (3) jusqu'à la première partie d'extrémité (11) de la plinthe (9), et la première partie d'extrémité (11) de la plinthe (9) étant fixée à la couche inférieure (5) par la couche adhésive (7).

2. Panneau arrière (1) selon la revendication 1, la couche inférieure (5) et la couche adhésive (7) s'étendant de 5 mm à 150 mm au-delà du fond (13) de la couche supérieure (3).

3. Panneau arrière (1) selon la revendication 1 ou 2, la couche supérieure (3) étant constituée de chlorure de polyvinyle ou de polyuréthane thermoplastique ou de cuir ou de textile.

4. Panneau arrière (1) selon l'une quelconque des revendications précédentes, la couche inférieure (5) étant constituée d'un matériau non tissé.

5. Panneau arrière (1) selon l'une quelconque des revendications précédentes, la plinthe (9) étant constituée d'un matériau de tapis ou de polychlorure de vinyle ou de polyuréthane thermoplastique ou de cuir ou de textile.

6. Panneau arrière (1) selon l'une quelconque des revendications précédentes, la plinthe (9) étant pliée à environ 90 degrés.

7. Siège de véhicule comprenant un panneau arrière (1) selon l'une quelconque des revendications précédentes.

8. Procédé de fabrication d'un panneau arrière (1) pour un siège de véhicule, comprenant les étapes de :
placement dans un outil d'une empilement formé d'un matériau de couche inférieure, d'un adhésif, d'un matériau de couche supérieure et d'un matériau de plinthe, une première partie d'extrémité (11) du matériau de plinthe venant en butée contre un fond du matériau de couche supérieure, l'adhésif étant placé entre le matériau de couche supérieure et le matériau de couche inférieure, et le matériau de couche inférieure et l'adhésif s'étendant au-delà du fond du matériau de couche supérieure jusqu'à la première partie d'extrémité (11) du matériau de plinthe ; et
soudage de l'empilement pour former un panneau arrière d'une seule pièce (1) comprenant une couche inférieure (5), une couche adhésive (7), une couche supérieure (3) et une plinthe (9).

9. Procédé selon la revendication 8, une seconde partie d'extrémité du matériau de plinthe étant protégée du processus de soudage.

10. Procédé selon la revendication 8 ou 9, une seconde partie d'extrémité du matériau de plinthe s'étendant à partir de l'outil.

11. Procédé selon l'une quelconque des revendications 8 à 10, le matériau de couche inférieure et l'adhésif s'étendant de 5 mm à 150 mm au-delà du fond (13) de la couche supérieure (3).

12. Procédé selon l'une quelconque des revendications 8 à 11, le matériau de couche supérieure étant du chlorure de polyvinyle ou du polyuréthane thermoplastique ou du cuir ou du textile.

13. Procédé selon l'une quelconque des revendications 8 à 12, le matériau de couche inférieure étant un matériau non tissé.

14. Procédé selon l'une quelconque des revendications 8 à 13, le matériau de plinthe étant un matériau de tapis ou du chlorure de polyvinyle ou du polyuréthane thermoplastique ou du cuir ou du textile.

15. Procédé selon l'une quelconque des revendications 8 à 14, la plinthe (9) étant pliée à environ 90 degrés.
